# EUROPEAN PATENT SPECIFICATION

(11) **EP 0 745 415 B1**
(45) Date of publication and mention of the grant of the patent: **01.08.2001**
(21) Application number: 96113134.9
(22) Date of filing: 05.01.1994
(51) Int. Cl.: B01D 29/39, B01D 29/66, B01D 29/82

(54) **Sludge filtering and thickening installation and method**
Anlage und Verfahren zum Filtern und Eindicken von Schlämmen
Procédé et installation de filtration et d'épaississement de boues

(30) Priority: 07.01.1993 JP 86793
(43) Date of publication of application: 04.12.1996
(62) Divisional of application: 94300040.6
(73) Proprietor: FUJI ELECTRIC CO. LTD., Kawasaki 210 (JP)
(72) Inventor: Yamaguchi, Mikimasa, Nagasaka Dormitory, Yokosuka City, Kanagawa 240-01 (JP); Fukuzawa, Hiroshi, Yokohama City, Kanagawa 222 (JP); Arai, Toshitaka, Kamagaya City, Chiba 273-01 (JP)
(74) Representative: Bridge-Butler, Alan James

(56) References cited:
- GB-A- 123 589
- US-A- 4 064 045

## Description

The present invention relates to a sludge filtering and thickening installation used in water purification plants and sewage treatment plants, for the filtration and thickening of sludge.

Sludge filtering and thickening equipment is disclosed in Japanese Patent Publications 60-59002 and 61-57043.

The filtering and thickening equipment has plate-like filter elements arranged in a sludge tank, one end of a filtrate discharge pipe connected to the plate-like filter element, and the other end drawn out of the sludge tank. When the sludge tank is filled with sludge, sludge particles accumulate on the plate-like filter element because the sludge on the surface of the plate-like filter element is pressurized by gravity or by negative pressure acting on the inside of the filtrate discharge pipe, and water contained in the sludge penetrates into the plate-like filter element, being discharged from the sludge tank through the filtrate discharge pipe.

To explain in detail, Patent Publication 60-59002 discloses a filtering and thickening equipment, in which hollow plate-like filter elements made of water-absorbing materials with both faces affixed with filter cloths are immersed in a tank containing a liquid including substances to be filtered and thickened, and a filtrate discharging means is provided on said plate-like filter elements. This equipment can form uniformly thick cakes.

In addition, Patent Publication 61-57043 discloses a filtering and thickening installation, in which water absorbing filter plates are disposed in a filtering and thickening tank, one end of a filtrate discharge pipe is connected to the filter plate, while the other end of the filtrate discharge pipe is connected to a siphon tube disposed externally to the filtering and thickening installation. This filtering and thickening installation is constructed so that filtrate is discharged from top of the filter plate and flows down by itself because of a siphon effect. Thus, this installation uses head pressure and the siphon effect in the filtering and thickening installation, and can efficiently form uniformly thick cakes on the filter plate.

US-A-4,064,045 discloses a sludge filtering and thickening installation consisting of a sludge tank having an unthickened sludge extracting device, filter plates disposed in the sludge tank, and a filtrate discharge pipe having one end connected to the filter plates and the other end leading out of said sludge tank. It further comprises an unthickened sludge displacement means consisting of a displacing body that can move under the action of a driving device towards and away from the surface of the filter plates.

GB-A-123,589 shows the use of a displacing body constituted by a number of filter plates in a similar type of filtering device.

As described above, in these types of equipment, semi-solid thickened sludge accumulates on the filter plate, while sludge that has not been thickened remains in the sludge tank. After the unthickened sludge is discharged outside of the tank, the thickened sludge is separated from the filter plate by blowing compressed air into the filter plate through, for example, the filtrate discharge pipe. The separated thickened sludge falls to bottom of the sludge tank, and this sludge is then removed from the tank.

When such filtering and thickening equipment is used, the objective of thickening sludge to a high concentration is achieved to some extent by increasing the duration of pressure and filtering. In this case, it is necessary to increase the negative pressure by employing a method to increase the force of gravity by increasing the height of the sludge tank, and a method to extend the length of the filtrate discharge pipe downward outside of the sludge tank.

For example, making the length of the filtrate discharge pipe outside the sludge tank 2.7 m will ensure a negative pressure of 26.6 kPa, while making it 9.5 m will ensure a negative pressure of 93.1 kPa. Filtering purified water sludge with a solids concentration of 4% for 40 minutes with a negative pressure set to 26.6 kPa results in a thickened sludge with a solids concentration of 10%. Filtering purified water sludge with a solids concentration of 4% for 40 minutes with a negative pressure set to 93.1 kPa results in a thickened sludge with a solids concentration of 13.6%. Next, if the filtering time is extended to 100 minutes, a thickened sludge with a solids concentration of 11.2% can be obtained when the negative pressure is set to 26.6 kPa, while a thickened sludge with a solids concentration of 14.5% can be obtained when the negative pressure is set to 93.1 kPa.

As described, the concentration of thickened sludge can be increased to some extent by increasing the negative pressure. However, if the negative pressure is kept constant while the filtration time is prolonged, the thickened sludge concentration under a negative pressure of 93.1 kPa as in the above case will increase only slightly from a solids concentration of 13.6% to a solids concentration of 14.5%.

The inventors of the present invention have investigated the causes thereof, and have discovered the following facts. When filtration is carried out continuously, sludge particles deposit on the filter cloths of the filter plate, forming deposition layers which increase the thickness and become compacted because the sludge particles are pressed tight by the filtration pressure, resulting in an increase of filtration resistance and a delay in the filtrate discharge. Water flow continues even during this process through portions where no deposition layers have been formed, making effective reduction of the water content in the deposition layers impossible. The thickness of the deposition layers continues to increase gradually under these conditions. Therefore, prolonging the filtration time or raising the negative pressure will not raise the concentration of thickened sludge in the form of deposition layers as high as had been expected.

The present invention has been made in the light of the above problems, and is intended to solve the problems found in conventional systems that require the pressure to be raised and the filtration time to be prolonged, and provide a sludge filtering and thickening installation and a method for the filtration and thickening of sludge that can produce a high-concentration sludge by preventing the water content of the unthickened sludge from passing into thickened sludge, present in the form of deposition layers formed on the filter plate, without increasing the gravity of the sludge by increasing the height of the sludge tank and increasing the negative pressure by extending the filtrate discharge pipe downwardly beneath the sludge tank.

According to the present invention a sludge filtering and thickening installation comprises a sludge tank having a thickened sludge extracting device, an unthickened sludge extracting device, filter plates disposed in the sludge tank, a filtrate discharge pipe having one end connected to the filter plates and the other end leading out of said sludge tank, and further comprising an unthickened sludge displacement means consisting of a displacing body that can move under the action of a driving device, towards and away from the surface of the filter plates and characterised by a water supply means for supplying water to said filtrate discharge pipe, a filtrate discharge pump operating on said discharge pipe to one side of the point where said water is supplied to said pipe from said water supply means and an air release means located in said discharge pipe on the other side of said water supply point.

The sludge filtering and thickening installation of the present invention operates in the following manner.

Firstly, because the filtrate discharge pipe is provided with a water supply means and a filtrate discharge pump, water can be supplied into the filtrate discharge pipe on the suction side of the filtrate discharge pump by using the water supply means. The filtrate discharge pump can continue to operate even when the pump chamber is filled with water. If the pump continues to operate when the pump chamber is filled with water, the pump generates negative pressure against the atmospheric pressure on the suction side. As a result, air in the filtrate discharge pipe on the suction side of the filtrate discharge pump and in the filter plate connected to the filtrate discharge pipe is drawn into the pump and is discharged together with water from the piping on the pipe delivery side.

If this operation continues, the air in the filtrate discharge pipe and the filter plate continues to be discharged outside the system, gradually increasing the negative pressure. Under this condition, since the water content of sludge on the surface of the filter plate is absorbed into the filter plate as filtrate, the inside of the filter plate and the filtrate discharge pipe fills up with this filtrate.

If the water supply to the filtrate discharge pipe stops at this stage, the filtrate discharge pump sucks only filtrate that has been absorbed into the filter plate through the filtrate discharge pipe. Therefore, the high negative pressure generated on the suction side of the filtrate discharge pump can be used in the filtrate discharge pipe to perform filtration.

Secondly, with the operations as described, the sludge can be filtered by the high negative pressure that is applied to the filtrate discharge pipe. Continuing the filtration, sludge particles deposit and accumulate on the filter cloth which is on the filter plate, forming thickened sludge. While this thickened sludge, which is formed from sludge particles that are compacted tightly, has no fluidity, the surrounding unthickened sludge remains fluid. If the unthickened sludge extracting device is operated at this stage, fluid unthickened sludge is extracted from the sludge tank, thereby bringing the thickened sludge on the filter plate in the sludge tank into contact with the atmosphere. Therefore, thickened sludge deposited on the filter plate no longer contacts unthickened sludge, while the filtering of only thickened sludge that has already been formed can continue, and high-concentration thickened sludge can be obtained.

Thirdly, in this installation, which is provided with a removal means for the unthickened sludge, the removing body is moved by the driving device before commencing sludge filtration, and the surface of the removing body is positioned sufficiently away from the surface of the filter plate, when sludge filtration begins. As sludge filtration progresses, sludge particles deposit on the filter plate, forming thickened sludge. This thickened sludge is formed by the tight compaction and deposition of sludge particles, hence it has no fluidity, although the surrounding unthickened sludge does have fluidity. Now, if the removing body is moved by the driving device so that it contacts or comes close to the thickened sludge on the filter plate, the unthickened sludge present around the thickened sludge can be removed from the space on the filter plate.

The thickened sludge formed on the filter plate is thus isolated from the unthickened sludge by the removing body, which means that only the thickened sludge already formed will be filtered without any water permeating from the unthickened sludge, thereby allowing high-concentration thickened sludge to be obtained.

Embodiments of the invention will now be described in detail with reference to the accompanying drawings, in which:

Figure 1 is a schematic view showing the construction of a filtering and thickening installation including its water supply means and filtrate discharge pump.

Figure 2 is a drawing showing one example of the water supply means of the installation of Figure 1.

Figure 3 is a schematic drawing showing a second example of the water supply means in Fig. 1.

Figure 4 is a schematic drawing showing a third example of the water supply means of the installation of Figure 1.

Figure 5 is a schematic view showing the construction of a filtering and thickening installation including its discharge valve for unthickened sludge.

Figure 6 is a schematic drawing showing the construction and operation of a filtering and thickening installation shown in Figure 5, including its water supply means.

Figure 7 shows a condition in which only thickened sludge has deposited on a filter plate, based on the operation illustrated in Figure 6.

Figure 8 is a schematic drawing showing the construction of the filtering and thickening installation according to the present invention, including its unthickened sludge removal means.

Figure 9 is a schematic drawing showing the construction of the filtering and thickening installation according to the present invention, disposed with a rubber diaphragm used as an unthickened sludge removal means.

Figure 10 is a schematic drawing showing the operation of the rubber diaphragm in Figure 9 together with the installation's configuration.

Figure 11 is a schematic drawing showing the construction of the filtering and thickening installation, using a removal plate, a supporting plate, and an air cylinder as an unthickened sludge removal means.

Figure 12 is a schematic drawing showing the installation conditions for a rubber diaphragm different from that seen in Figure 9, together with the installation's configuration.

Figure 13 is a schematic drawing showing the operation of the rubber diaphragm in Figure 12 together with the installation's configuration.

Figure 14 is a schematic drawing showing the construction of the filtering and thickening installation, utilizing a removal plate, and including a supporting plate and an air cylinder installed on an inner wall of the sludge tank as an unthickened sludge removal means.

Figure 15 is a schematic drawing showing the operation of the unthickened sludge removal means in Figure 14 together with the installation's configuration.

Explanations of the embodiments of the filtering and thickening installation according to the present invention are provided hereunder with reference to the appended drawings.

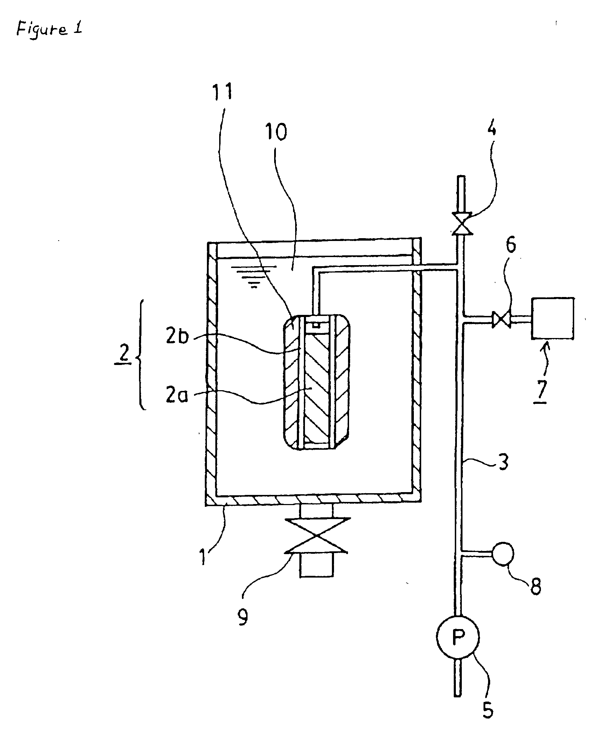

Figure 1 is a schematic drawing showing the construction of a sludge filtering and thickening installation part of it being shown in a cross section. Figure 1 shows how thickened sludge, i.e. sludge that has become nonfluid, is formed on the filter cloth, while unthickened sludge retaining fluidity still remains in the sludge tank away from the surface of the filter cloths. For the sake of simplicity, only one filter plate is shown in the Figure.

In Figure 1, a filter plate 2 comprising a water-permeable plate 2a and a filter cloth 2b sealing the outer surface of the water-permeable plate 2a is disposed at the centre of a sludge tank 1, where a filtrate discharge pipe 3 connected to the upper edge of the filter plate 2 leads to the outside of the sludge tank 1. The filtrate discharge pipe 3 extends horizontally out of the sludge tank 1 and then branches vertically upwardly and downwardly, the upwardly extended branch being connected to an air release valve 4. The downwardly extended branch continues beneath the base of the sludge tank 1 and is connected to the intake side of a filtrate discharge pump 5. A water supply means 7 is connected via a gate valve 6 to the filtrate discharge pipe 3 upstream of the discharge pump 5, and a vacuum indicator 8 is connected to the filtrate discharge pipe 3 between the air release valve 4 and the filtrate discharge pump 5. A discharge valve 9 for thickened sludge is provided in the base of the sludge tank 1.

Unthickened sludge 10 is supplied into the sludge tank 1 and is filtered to form a layer of thickened sludge 11 on the surface of the filter cloth 2b located on the filter plate 2, while water from the sludge permeates through the filter cloth 2b and is discharged through the filtrate discharge pipe 3.

The operation of the filtering and thickening installation constructed as above is as follows:

First, unthickened sludge 10 to be thickened is supplied into the sludge tank 1 up to a level above the top of the filter plate 2. The air release valve 4 and gate valve 6 are opened, and the filtrate discharge pipe 3 is filled with water by the water supply means 7. Air present in the filtrate discharge pipe 3 escapes through the air release valve 4. The air release valve 4 is then closed, and the filtrate discharge pump 5 is operated, and the gate valve 6 is closed when the pressure reaches a predetermined value, as indicated by the vacuum indicator 8. The operation of the pump with the air release valve closed causes negative pressure, augmented by the siphon effect according to the length of the filtrate discharge pipe 3, to act upon inside the filter plate 2, causing the water contained in the unthickened sludge 10 in contact with the filter cloth 2b be permeate inside the filter plate 2 to be discharged via the filtrate discharge pipe 3, while the particles in the unthickened sludge 10 are collected and deposited on the filter cloth 2b. Suction pressure in the filtrate discharge pump 5 is monitored by the vacuum indicator 8, and when the water supply is stopped as the pressure reaches 200 mmHg, the filtrate discharge pump 5 operates with increased suction pressure that causes a greater negative pressure to act upon the inside of the filter plate 2. This negative pressure can reach a maximum of 700 mmHg.

The interior of the filter plate 2 has sufficient negative pressure, where sludge is filtered and a layer of thickened sludge 11 is deposited on the surface of the filter plate 2. The filtrate discharge pump 5 is then stopped, and the unthickened and still fluid sludge 10 is removed from the sludge tank 1. Air is then blown back into the tank through the air release valve 4 to back-flush the filter plate 2, and the thickened sludge 11 falls from the filter cloth 2a to the base of the tank from where it can be removed from the tank via the thickened sludge removal valve 9.

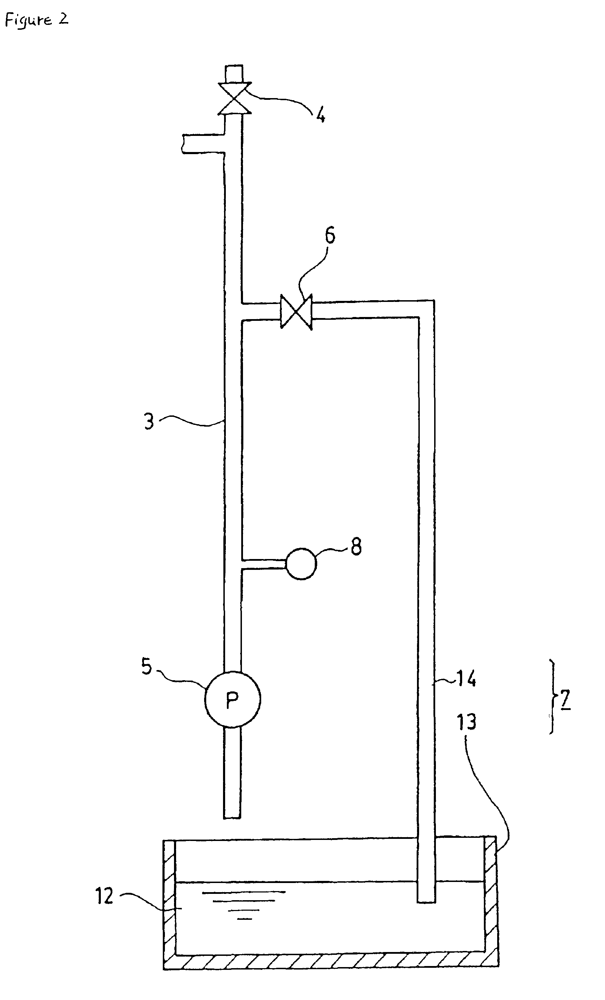

Figure 2 is a schematic drawing showing one example of the water supply means 7 in Figure 1, and the parts common to those in Figure 1 have been assigned the same numbers. The installation shown in Figure 2 differs from that of Figure 1 in that filtrate 12 is used instead of water fed from the water supply means 7, and the installation shown in Figure 2 uses a filtrate tank 13 and a suction pipe 14 to provide water instead of the water supply means 7. In Figure 2, an extended portion of the piping to the gate valve 6 forms the suction pipe 14 that is parallel to the filtrate discharge pipe 3, the lower end thereof reaching into the filtrate tank 13 to dip into the liquid therein. It will be appreciated that the lower end of the suction pipe 14 is placed below the lower end of the filtrate discharge pipe 3. To explain the operation, first the filtrate tank 13 is filled with water to a level above the lower end of the suction pipe 14 but below the lower end of the discharge pipe 3; the pump 5 is then operated with the air release valve 4 closed and the gate valve 6 opened to suck water into the suction pipe 14; water is supplied into the filtrate discharge pipe 3 through the suction pipe 14. Operation then continues as described above, the gate valve 6 being closed after the sludge has been filtered and filtrate 12 has flowed into the filtrate tank 13. Thereafter, the filtrate 12 can be used as feed water.

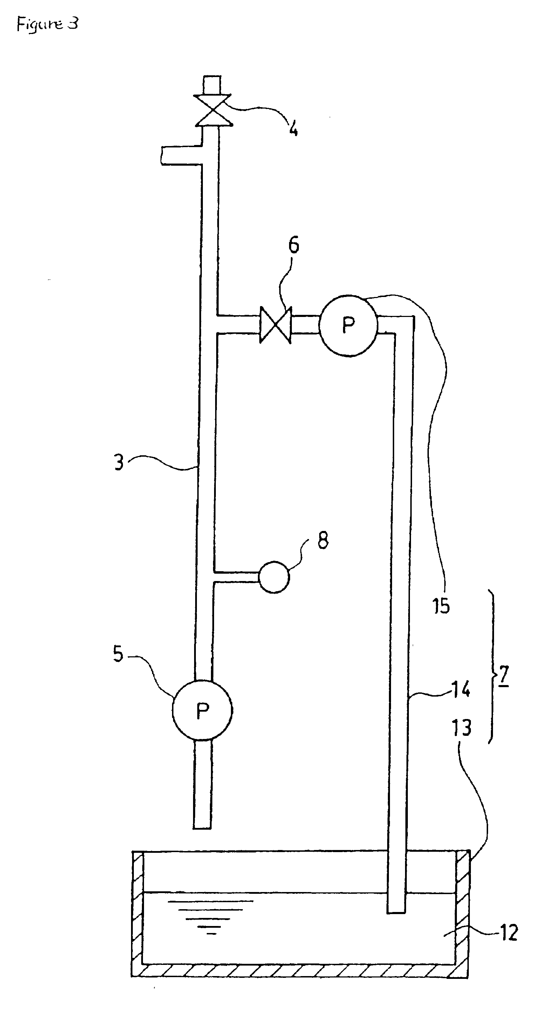

Figure 3 is a schematic drawing showing another alternative to the water supply means 7, which has basically the same configuration as that shown in Figure 2. However, it is different from the one shown in Figure 2 in that a water feed pump 15 is provided in the suction pipe 14 between the filtrate tank 13 and the gate valve 6. This arrangement assures a more reliable water supply into the filtrate discharge pipe 3, and can raise the supply velocity.

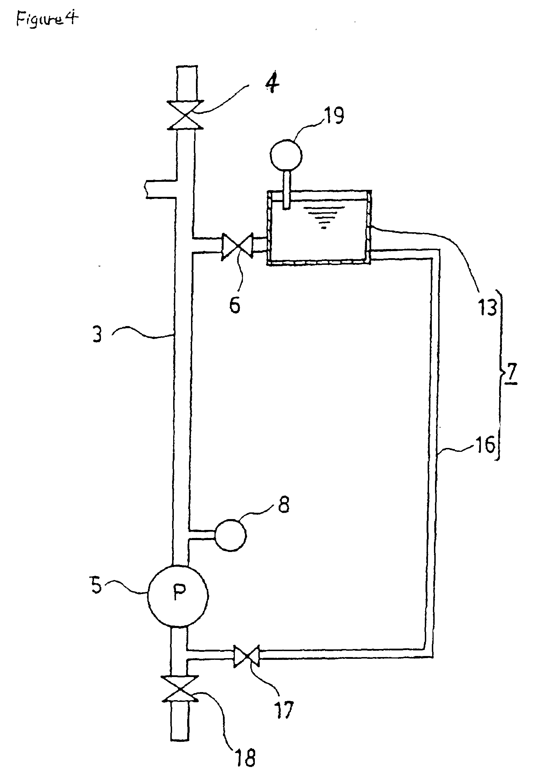

Figure 4 is a schematic drawing showing still another alternative to water supply means 7. In this example, the filtrate tank 13 is installed adjacent to the gate valve 6, and the filtrate discharge pipe 3 is connected downstream of the filtrate discharge pump 5 to a second gate valve 17 leading to an inlet pipe 16 for the filtrate tank 13. A third gate valve 18 near the end of the filtrate discharge pipe 3 allows filtrate to be delivered to the filtrate tank 13 by closing the third gate valve 18 and opening the second gate valve 17. A water level gage 19 is also disposed in the filtrate tank 13. Thus, the filtrate tank 13 is placed at a considerably higher position relative to the filtrate discharge pipe 3 than in the examples shown in Figures 2 and 3.

The operation of the installation shown in Figure 4 is as follows:

First, the air release valve 4 and the gate valve 6 are opened to feed water into the filtrate discharge pipe 3;

The air release valve 4 is closed; the filtrate discharge pump 5 is operated, with the second gate valve 17 closed and the third gate valve 18 opened;

After the required degree of vacuum has been raised, the gate valve 6 and the third gate valve 18 are closed, while the second gate valve 17 is opened to feed filtrate 12 into the filtrate tank 13;

When the water level gage 19 indicates that the water level of the filtrate 12 has reached a certain level, then second gate valve 17 is closed and third gate valve 18 is opened to allow surplus filtrate 12 to be discharged.

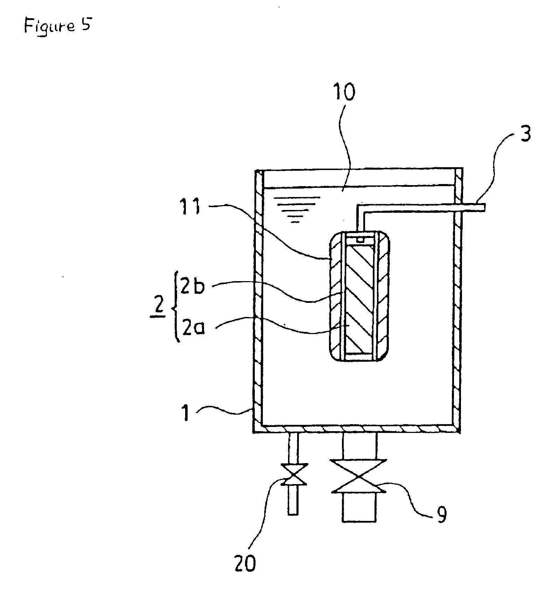

Figure 5 is a schematic drawing showing the construction of an installation used to obtain high-concentration thickened sludge, partially shown in cross section. The parts common to Figure 1 are given the same reference numbers. The difference between the installation shown in Figure 5 and that shown in Figure 1 is that an unthickened sludge removal valve 20 is added to the bottom of the sludge tank 1 as an unthickened sludge extracting device. The unthickened sludge extracting device can alternatively be a pump, which is used to extract unthickened sludge. Since the filtrate discharge pipe 3 and the water supply means 7 are identical with those already shown, their illustrations are omitted. The installation shown in Figure 5 can discharge unthickened sludge 10 from the tank 1 via the unthickened sludge removal valve 20, and the filtrating operation continues even if filtration has progressed and thickened sludge 11 has been formed.

To explain, when the unthickened removal valve 20 is opened and the fluid unthickened sludge 10 is removed from the sludge tank 1, the thickened sludge formed on the filter plate 2 in the sludge tank 1 contacts the atmosphere. Thus the thickened sludge 11 deposited on the filter plate 2 no longer contacts the liquid unthickened sludge 10. As a result, the suction applied to the filter plate 2 by the filtrate discharge pipe 3 causes further filtration of only the already formed condensed sludge 11 can continue, thereby creating high-concentration thickened sludge.

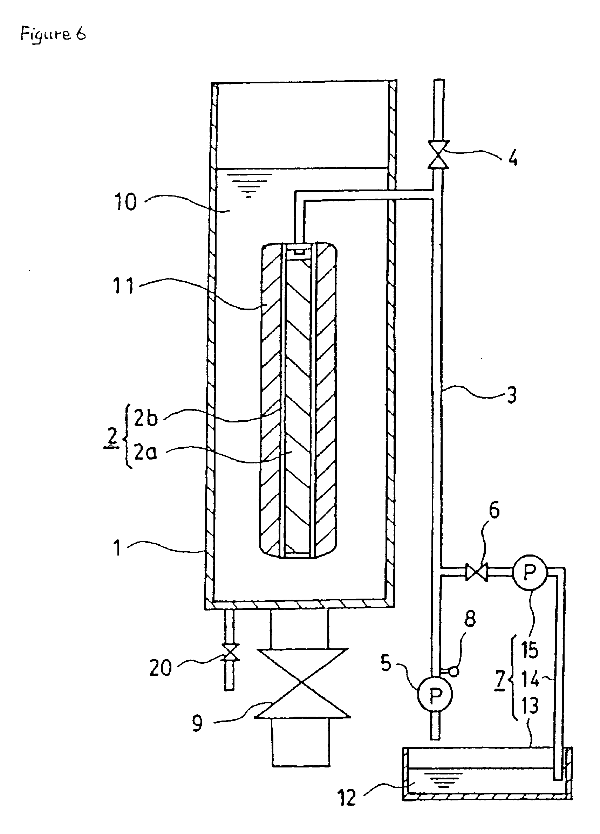

Figure 6 is a schematic drawing showing the filtrate discharge pipe 3 and the water supply means 7, whose illustrations have been omitted in Figure 5. The filtrate discharge pipe 3 and the water supply means 7 in Figure 6 have the configuration shown in Figure 3, hence a detailed explanation thereof is omitted. The Figure shows that the thickened sludge 11 is formed on the filter cloth 2b, while the unthickened sludge 10 remains in the body of liquid in the sludge tank 1 away from the surface of the filter cloth 2b.

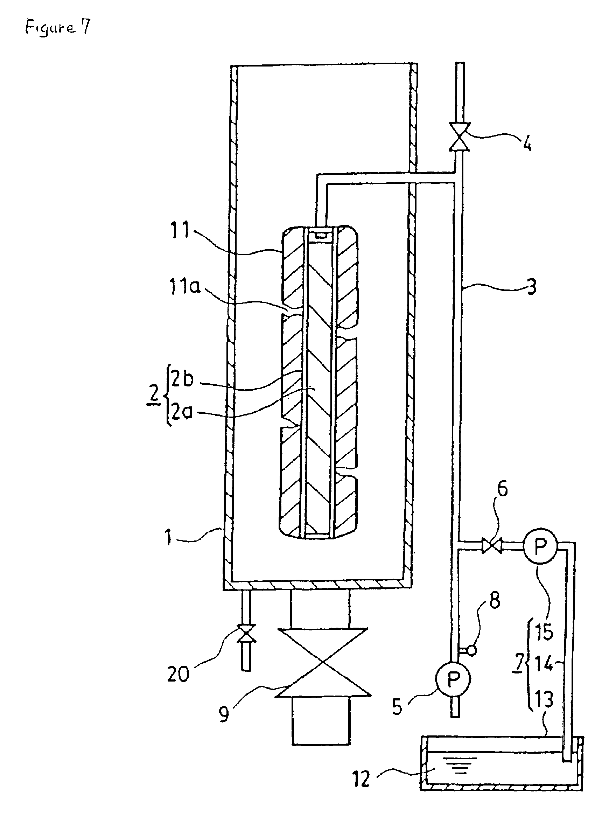

Figure 7 shows the result of continued filtration with the unthickened sludge removal valve 20 opened when the thickness of the deposited layers of thickened sludge 11 shown in Figure 6 has increased, and the unthickened sludge 10 in the sludge tank 1 has been removed. Only the thickened sludge 11 which has been deposited on the surface of the filter cloth 2b located on the filter plate 2 remains in the sludge tank 1, and water removal from only the thickened sludge 11 has progressed with no water being supplied to the thickened sludge 11 from the unthickened sludge 10 present off the filter cloth 2b. The Figure further shows a state in which the thickened sludge 11 has contracted generating cracks 11 a. When cracks 11 a are generated, air enters into the filter plate 2 through these cracks 11a, thereby reducing the negative pressure force in the filter plate 2. Therefore, thickening and filtration can continue effectively only until these cracks 11 a are formed to a depth that reaches the filter cloth 2b.

Using purified water sludge with a solids component of 4%, for example, as a sludge test specimen, the interior of the filter plate 2 was subjected to negative pressure of 700 mmHg by operating the filtrate discharge pump 5. The test specimen was filtered for 30 minutes, and then the unthickened sludge removal valve 20 was opened and the unthickened sludge 10 removed from the tank. The filtration continued with only the thickened sludge 11 deposited on the surface of the filter cloth 2b located on the filter plate 2. The degree of vacuum dropped slowly after 34 minutes, and the indication on the vacuum gage fell to below 300 mmHg after 40 minutes. The solids component in the thickened sludge at this time was 20.4%, which means that a higher solids concentration was achieved than that which is obtained by conventional methods which simply raise the degree of vacuum.

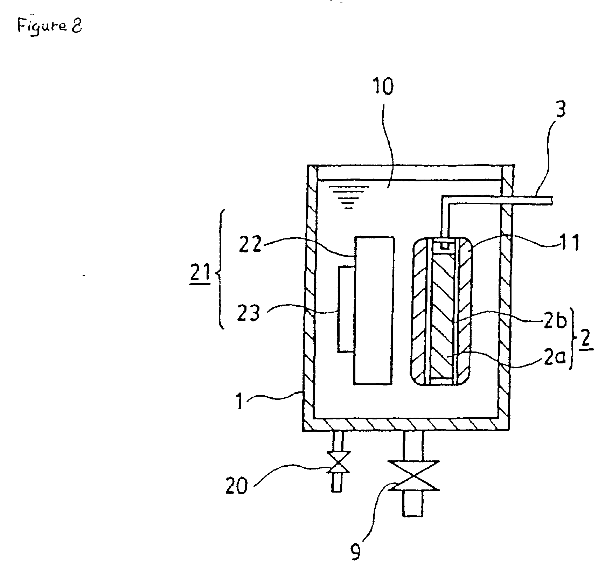

Figure 8 is a schematic drawing for a filtering and thickening installation according to the present invention and which includes a means 21 to displace the unthickened sludge 10 in the sludge tank 1 of the installation shown in Figure 5. Since other arrangements are identical with those in Figure 5, the explanation of such arrangements is omitted. The unthickened sludge displacement means 21 comprises a displacing body 22 and a driving device 23, in which one main free face of the displacing body 22 faces the main free face of the layer of thickened sludge 11 on the filter cloth 2b located on the filter plate 2. The free face of the displacing body is preferably arranged to extend vertically to the floor. The displacing body 22 can be moved towards and away from the surface of the thickened sludge 11 by the driving device 23. A second unthickened sludge displacement means (not shown) may be arranged for the thickened sludge 11 on the opposite side of the filter plate 2. In the figure, only one unthickened sludge displacement means 21 is shown for the sake of simplicity.

The unthickened sludge displacement means 21 moves the displacing body 22 toward the thickened sludge 11 so that it approaches the thickened sludge 11 and presses the displacing body 22 against the thickened sludge 11 to put them close together using the driving device 23 when the thickness of the thickened sludge 11 is increased. The presence of the displacing device prevents the unthickened sludge 10 in the tank from contacting the layer of thickened sludge 11, so that only the thickened sludge 11 will be filtered. The thickened sludge 11 is not affected by the water content of the unthickened sludge 10. Moreover, since unthickened sludge 10 remains around the circumference of the filter plate 2, preventing air from entering into the filter plate 2 even if cracks were to appear in the thickened sludge 11, the negative pressure in the filter plate 2 is prevented from dropping, which makes it possible to obtain a high-concentration thickened sludge. Once filtration is completed, the displacing body 22 that has approached or contacted the thickened sludge 11 moves away from the filter plate 2 to ensure a space through which thickened sludge 11 can be discharged.

Using purified water sludge with a solids component of 4%, for example, as a sludge test specimen, the interior of the filter plate 2 was subjected to negative pressure of 700 mmHg by operating the filtrate discharge pump 5, the test specimen was filtered for 30 minutes, and then the displacing body 22 was pressed onto the layer of thickened sludge 11 on the filter plate 2 so that the two contacted tightly with each other. After the unthickened sludge is displaced away from near the thickened sludge, the test specimen was filtered for a further 40 minutes. The negative pressure in the filtrate discharge pipe 3 was maintained at 700 mmHg during this experiment. Upon completion of filtration, the unthickened sludge removal valve 20 was opened to remove unthickened sludge, the displacing body 22 was moved away from the filter plate 2, and the thickened sludge on the filtration face of the filter plate 2 was removed from the sludge tank. This thickened sludge had a solids component of 30.1%.

Other means to displace the unthickened sludge 10 besides the above means may also be conceived.

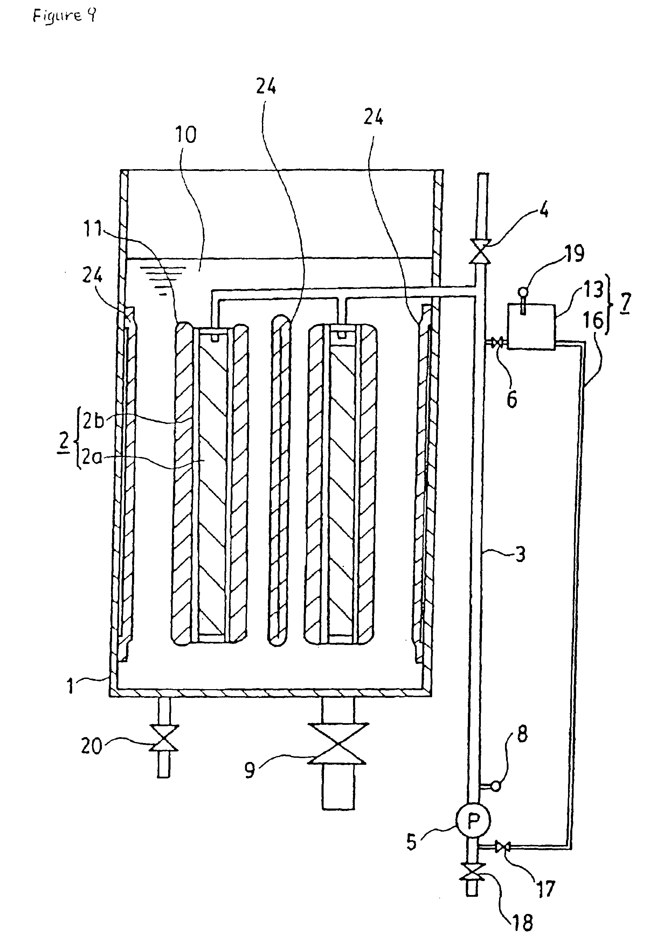

Figure 9 is a schematic drawing showing the filtering and thickening installation, disposed with a rubber diaphragm to displace the unthickened sludge 10. The parts common to those in the figures shown earlier are assigned the same numbers. In this figure, an installation using two filter plates 2, and the water supply means shown in Figure 4 is illustrated. The installation in Figure 9 includes rubber diaphragms 24 that are disposed facing the vertical faces of the filter plates 2, one on the inner walls of the sludge tank 1, and the other in the centre between the filter plates 2. The rubber diaphragms are connected to a device, not shown, capable of supplying and discharging pressurized fluid, for example air. When the filtering operation has reached the point where a layer of thickened sludge 11 has been deposited with increased thickness on the surface of the filter plate 2, pressurized air is supplied into the rubber diaphragms 24 to inflate them.

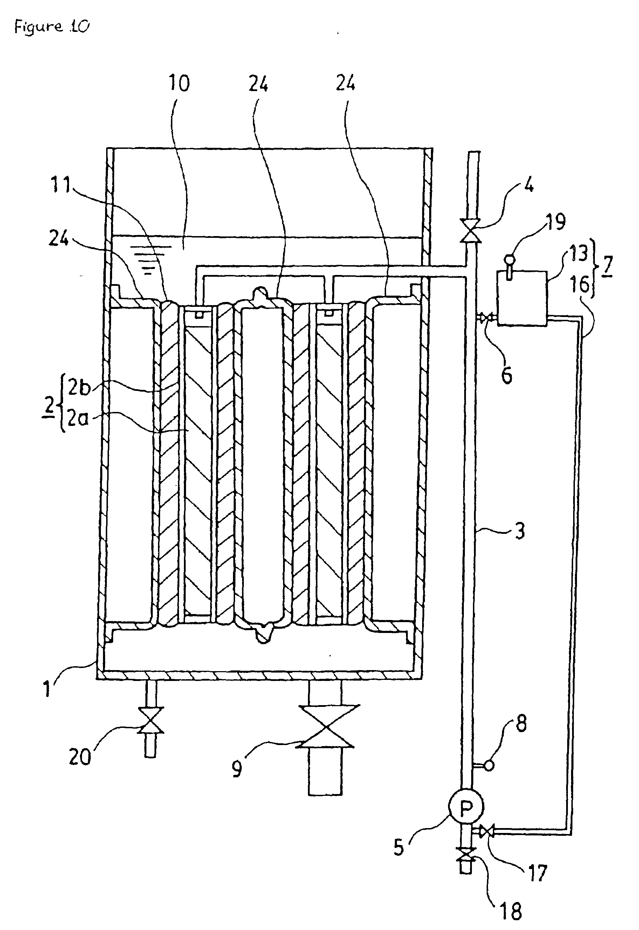

Figure 10 shows the rubber diaphragms 24 shown in Figure 9 in their inflated condition, with the surfaces of the diaphragms 24 contacting the thickened sludge 11. After inflation of the diaphragms 24, the unthickened sludge 10 is displaced from the filter cloths 2b located on the filter plates 2, and only the thickened sludge 11 is filtered on the filter plates 2.

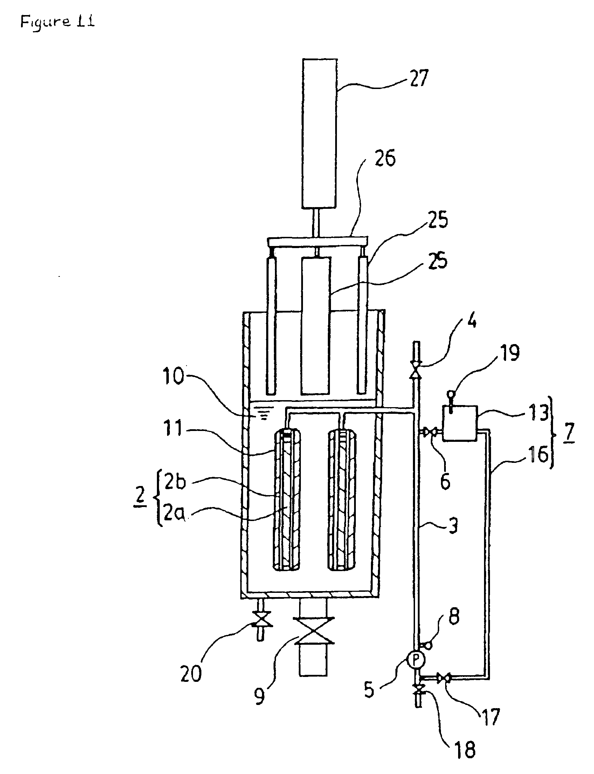

The installation shown in Figure 11 has, for example, various displacement plates 25 fitted on a supporting plate 26 at a predetermined spacing in parallel, the supporting plate 26 is connected to an actuator such as an air cylinder 27, and the other ends of the displacement plates 25 are vertically movable so as to be able to be inserted into the sludge tank 1 at positions close to the filter cloths 26 located on the filter plates 2 and to a predetermined depth in parallel with the filter plates 2. If the air cylinder 27 is operated after the layer of thickened sludge 11 has formed on the surface of the filter plates 2, the displacement plates 25 descend to displace the unthickened sludge 10, and as a result, contact the surface of the layers of non-fluid thickened sludge 11. Because thickened sludge 11 remains on the filter cloths 2b located on the filter plates 2, only the thickened sludge 11 is filtered and thickened efficiently.

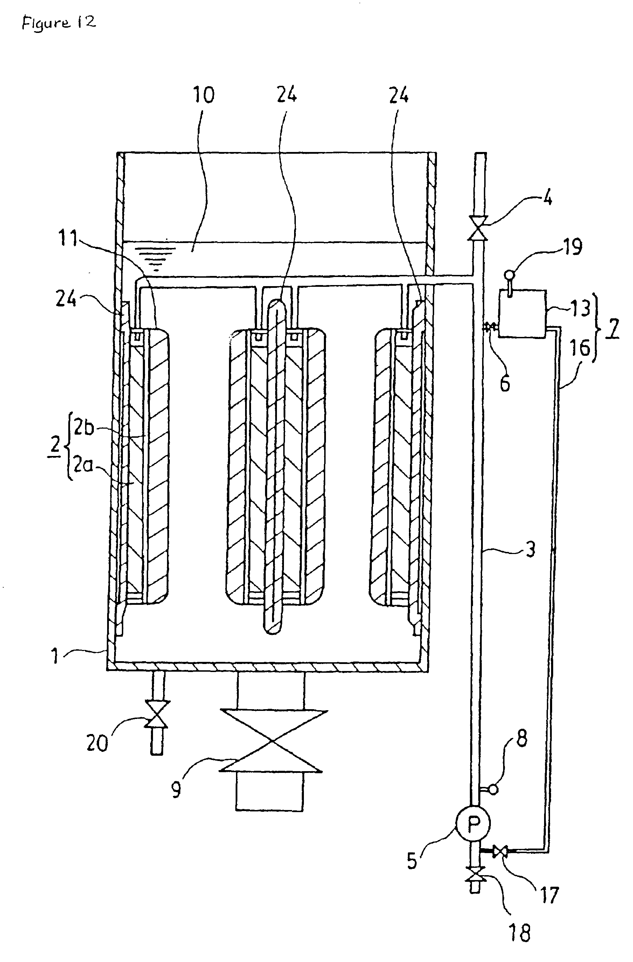

The installation shown in Figure 12 uses rubber diaphragms 24 as does the installation shown in Figure 9. However, this installation is different from the installation shown in Figure 9 in that the filter plates 2 are movable, and are attached to the main surfaces of the rubber diaphragms 24. The rubber diaphragms 24 are arranged at the centre and on the side walls of the sludge tank 1, and the filter cloths 2b are affixed, facing each other, on the faces of the filter plates 2, which face away from the diaphragms 24. The Figure shows layers of thickened sludge 11 deposited and formed on the surfaces of the four filter plates 2 and unthickened sludge 10 is in contact with the thickened sludge 11 deposited on the surfaces of the filter cloths 2b, which face each other, and the parts common to those in the figures so far explained are assigned the same numbers.

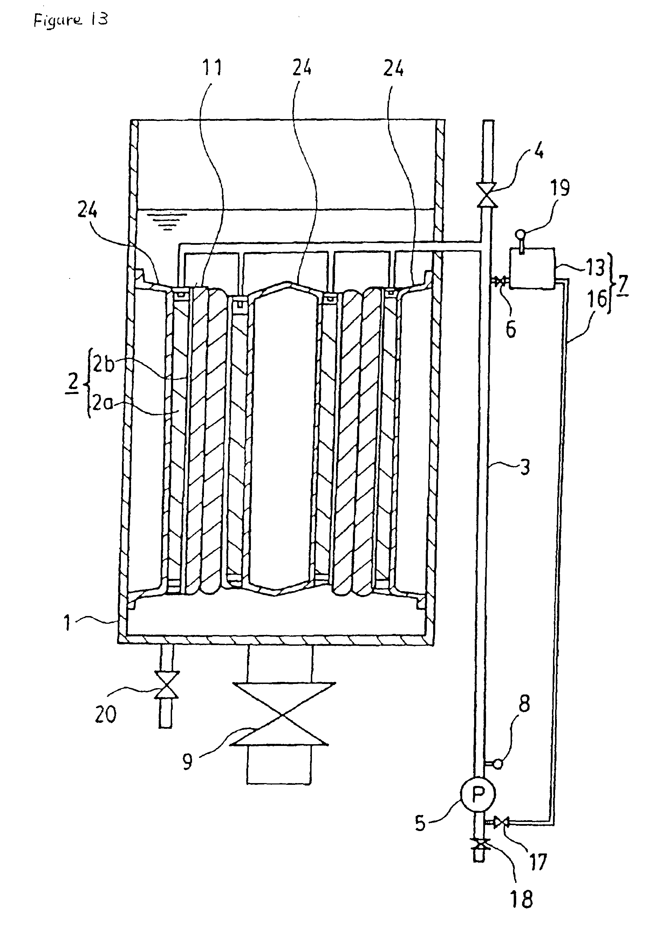

Figure 13 shows unthickened sludge 10 displaced from the installation shown in Figure 12, where only thickened sludge 11 is being filtered. In other words, the figure shows the installation in Figure 12 in a state in which pressurized air is being blown into the rubber diaphragms 24 to inflate them the unthickened sludge 10 has been removed and the thickened sludge 11 are in close contact with each other. Thickened sludge 11 with a thickness that has doubled offers an advantage in that it will drop off more easily.

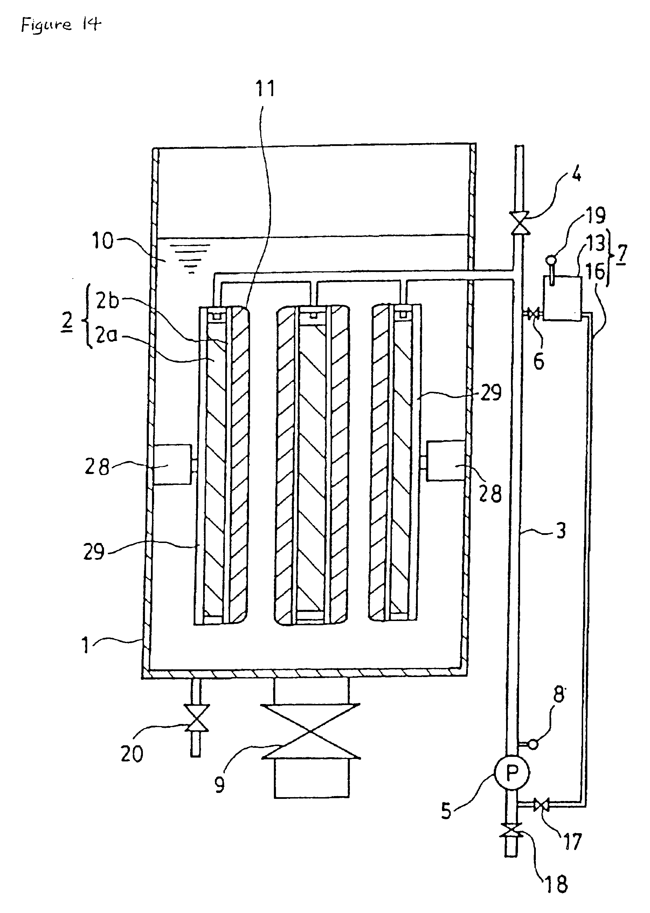

The installation shown in Figure 14 has two cylinders 28, each extending horizontally from a side wall of the sludge tank 1, the air cylinders 28 carrying respective vertically arranged filter plates 2 on supporting plates 29. No filter cloths are fixed to the faces of the filter plates 2 attached to the supporting plates 29. Additionally, a filter plate 2 having filter cloths 2b on both of its vertical faces is arranged in a position at the centre of a sludge tank 1. This installation utilizes the filter plates 2 themselves to displace unthickened sludge 10. The installation shown in Figure 14 has layers of thickened sludge 11 deposited and formed on the surfaces of the filter plates 2.

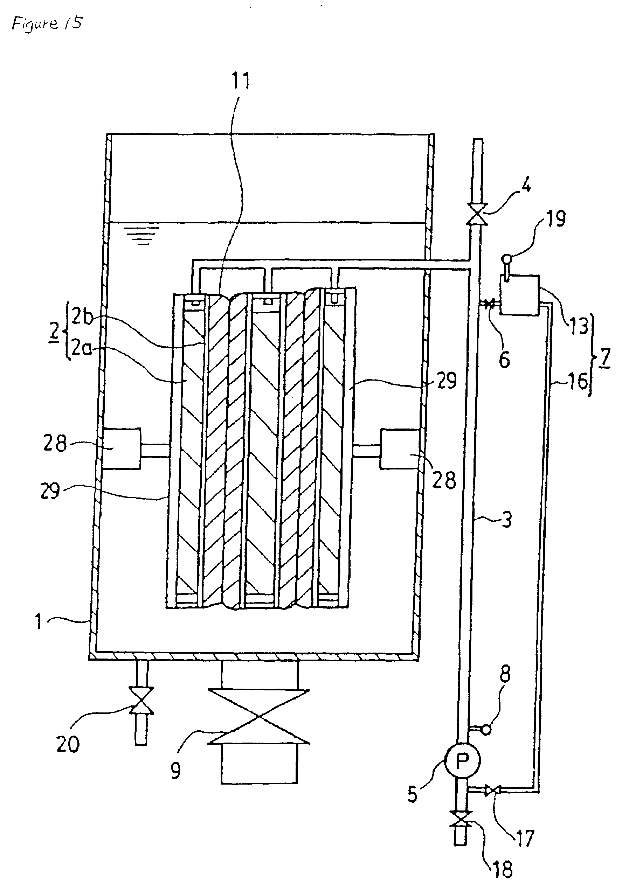

Figure 15 shows the installation shown in Figure 14 with the cylinders 28 extended so that the filter plates 2 carried thereon have been moved toward the filter plate 2 at the centre of the tank. As can be seen in Figure 15, the layers of thickened sludge 11 formed on the filter plates 2 are tightly pressed together to remove them from contact with any unthickened sludge 10 remaining in the tank 1, and filtering of the thickened sludge 11 is then continued. As the filter plates 2 are moved, the filtrate discharge pipe 3 linking the plates in the sludge tank 1 is also moved. The filtrate discharge pipe 3 may be flexible, or may be otherwise adapted as necessary to permit this movement.

The filtering and thickening installation, and the method for filtering and thickening thereof have been explained. Basically, in the present invention, a water supply means and a filtrate discharge pump are fitted onto a filtrate discharge pipe to increase the negative pressure within the filter plates, an unthickened sludge extraction device is fitted in a sludge tank to obtain a high-concentration sludge, and an unthickened sludge displacement means is also provided.

Conventional sludge filtering and thickening installations supply sludge into the sludge tank, collect sludge particles on the surfaces of the filter plates using the negative pressure generated in the filter plates by the water filled into the filtrate discharge pipe, and discharge the water from the tank through the filtrate discharge pipe. On the other hand, the filtering and thickening installation according to the present invention is, as explained in the preferred embodiments, provided with a water supply means and a filtrate discharge pump so that a high negative pressure will act on the inside of the filter plates, wherein filtration progresses as unthickened sludge is removed from the sludge tank using an unthickened sludge extraction device disposed at the bottom of the sludge tank, while filtration of previously formed thickened sludge continues. In addition, an unthickened sludge displacement means disposed in the sludge tank isolates the unthickened sludge from the thickened sludge, and filters the thickened sludge without being affected by the water in the unthickened sludge.

If sludge is filtered and thickened using the filtering and thickening installation according to the present invention, a high negative pressure is applied to the filter plates, so that high-concentration thickened sludge can be obtained efficiently by the operating devices disposed in the sludge tank.

## Claims

1. A sludge filtering and thickening installation comprising a sludge tank (1) having a thickened sludge extracting device (9), an unthickened sludge extracting device (20), filter plates (2) disposed in the sludge tank (1), a filtrate discharge pipe (3) having one end connected to the filter plates (2) and the other end leading out of said sludge tank (1), and further comprising an unthickened sludge displacement means (22,24,25) consisting of a displacing body (22,24,25) that can move under the action of a driving device, towards and away from the surface of the filter plates (2) and
characterised by a water supply means (7) for supplying water to said filtrate discharge pipe (3), a filtrate discharge pump (5) operating on said discharge pipe (3) to one side of the point where said water is supplied to said pipe from said water supply means (7) and an air release means (4) located in said discharge pipe (3) on the other side of said water supply point.

2. A sludge filtering and thickening installation as claimed in claim 1 characterised in that said water supply means (7) comprises a filtrate tank (13) and a suction pipe (14), one end of said suction pipe (14) being immersed in the filtrate tank (13) and another end being connected to the filtrate discharge pipe (3) at the upstream side of the filtrate discharge pump (5) through a gate valve (6).

3. A sludge filtering and thickening installation as claimed in claim 1 characterised in that said water supply means (7) comprises a filtrate tank (13), a suction pipe (14) and a water feed pump (15) one end of said suction pipe (14) being immersed in the filtrate tank (13) and another end being connected to the filtrate discharge pipe (3) at the upstream side of the filtrate discharge pump (5) through the water feed pump (15) and a gate valve (6).

4. A sludge filtering and thickening installation as claimed in claim 1 characterised in that said water supply means (7) comprises a filtrate tank (13) and a connection pipe (16) one end of said connection pipe (16) being connected to the filtrate discharge pump (3) at the upstream side of the filtrate discharge pump (5) through the filtrate tank (13) and a gate valve (6), another end of the connection pipe (16) being connected to the filtrate discharge pipe (3) at the downstream side of the filtrate discharge pump (5) through a second gate valve (17).

5. A sludge filtering and thickening method characterised by
1) supplying unthickened sludge (10) to be thickened to a sludge tank (1) containing a number of filter plates (2)
2) releasing air through an air release means (4) from a filtrate discharge pipe (3) connected to the upper sides of the filter plates (2)
3) filling the filtrate discharge pipe (3) with water from a water supply means (7) through a gate valve (6)
4) closing the air release means (4)
5) operating a filtrate discharge pump (5) and closing the gate valve (6) to extract filtrate within the filter plates (2)
6) forming thickened sludge (11) on the filter plates (2)
7) displacing the unthickened sludge (10) from contact with the thickened sludge (11) on the filter plates (2) using an unthickened sludge displacement means [21,24,(25,26,27), (28,29)]
8) further filtering the thickened sludge (11) on the filter plates 2) by continuing to operate the filtrate discharge pump (5) to apply suction to the filtrate discharge pump (3)
9) stopping the filtrate discharge pump (5)
10) removing the fluid thickened sludge (10) from the tank (1) through an unthickened sludge extracting device (20)
11) opening the air release means (4)
12) removing the thickened sludge (11) from the tank (1) through a thickened sludge extracting device (9).

## Patentansprüche

1. Anlage zum Filtern und Eindicken von Schlämmen mit einem Schlammbehälter (1) mit einer Vorrichtung (9) zum Gewinnen von eingedicktem Schlamm, einer Vorrichtung (20) zum Gewinnen von nicht eingedicktem Schlamm, Filterplatten (2), die im Schlammbehälter (1) angeordnet sind, einem Filtratabzugsrohr (3), dessen eines Ende mit den Filterplatten (2) verbunden ist und dessen anderes Ende aus dem Schlammbehälter (1) herausführt, und ferner mit einer Vorrichtung (22, 24, 25) zum Verdrängen von nicht eingedicktem Schlamm, welche aus einem Verdrängungskörper (22, 24, 25) besteht, der sich unter der Wirkung einer Antriebsvorrichtung zur Oberfläche der Filterplatten (2) hin und von dieser weg bewegen kann, und gekennzeichnet durch eine Wasserzufuhrvorrichtung (7) zum Zuführen von Wasser zu dem Filtratabzugsrohr (3), eine Filtratabzugspumpe (5), die am Abzugsrohr (3) zu einer Seite des Punkts wirkt, wo das Wasser von der Wasserzufuhrvorrichtung (7) dem Rohr zugeführt wird, und eine Entlüftungsvorrichtung (4), die sich in dem Abzugsrohr (3) auf der anderen Seite des Wasserzufuhrpunkts befindet.

2. Anlage zum Filtern und Eindicken von Schlämmen nach Anspruch 1, dadurch gekennzeichnet, daß die Wasserzufuhrvorrichtung (7) einen Filtratbehälter (13) und ein Saugrohr (14) umfaßt, wobei ein Ende des Saugrohrs (14) in den Filtratbehälter (13) eingetaucht ist und ein anderes Ende mit dem Filtratabzugsrohr (3) auf der Stromaufwärtsseite der Filtratabzugspumpe (5) über ein Absperrventil (6) verbunden ist.

3. Anlage zum Filtern und Eindicken von Schlämmen nach Anspruch 1, dadurch gekennzeichnet, daß die Wasserzufuhrvorrichtung (7) einen Filtratbehälter (13), ein Saugrohr (14) und eine Wasserspeisepumpe (15) umfaßt, wobei ein Ende des Saugrohrs (14) in den Filtratbehälter (13) eingetaucht ist und ein anderes Ende mit dem Filtratabzugsrohr (3) auf der Stromaufwärtsseite der Filtratabzugspumpe (5) über die Wasserspeisepumpe (15) und ein Absperrventil (6) verbunden ist.

4. Anlage zum Filtern und Eindicken von Schlämmen nach Anspruch 1, dadurch gekennzeichnet, daß die Wasserzufuhrvorrichtung (7) einen Filtratbehälter (13) und ein Verbindungsrohr (16) umfaßt, wobei ein Ende des Verbindungsrohrs (16) mit der Filtratabzugspumpe [dem Filtratabzugsrohr] (3) an der Stromaufwärtsseite der Filtratabzugspumpe (5) über den Filtratbehälter (13) und ein Absperrventil (6) verbunden ist, und ein anderes Ende des Verbindungsrohrs (16) mit dem Filtratabzugsrohr (3) auf der Stromabwärtsseite der Filtratabzugspumpe (5) über ein zweites Absperrventil (17) verbunden ist.

5. Verfahren zum Filtern und Eindicken von Schlämmen, gekennzeichnet durch
1) Zuführen von einzudickendem, nicht eingedicktem Schlamm (10) zu einem Schlammbehälter (1), der eine Anzahl von Filterplatten (2) enthält
2) Abführen von Luft durch eine Entlüftungsvorrichtung (4) aus einem Filtratabzugsrohr (3), das mit den oberen Seiten der Filterplatten (2) verbunden ist
3) Füllen des Filtratabzugsrohrs (3) mit Wasser von einer Wasserzufuhrvorrichtung (7) über ein Absperrventil (6)
4) Schließen der Entlüftungsvorrichtung (4)
5) Betätigen einer Filtratabzugspumpe (5) und Schließen des Absperrventils (6), um Filtrat innerhalb der Filterplatten (2) zu gewinnen
6) Bilden von eingedicktem Schlamm (11) an den Filterplatten (2)
7) Verdrängen des nicht eingedickten Schlamms (10) vom Kontakt mit dem eingedickten Schlamm (11) an den Filterplatten (2) unter Verwendung einer Vorrichtung [21, 24, (25, 26, 27), (28, 29)] zum Verdrängen von nicht eingedicktem Schlamm
8) weiteres Filtern des eingedickten Schlamms (11) an den Filterplatten (2) durch Fortsetzen der Betätigung der Filtratabzugspumpe (5), um einen Sog auf die Filtratabzugspumpe [das Filtratabzugsrohr] (3) aufzubringen
9) Stoppen der Filtratabzugspumpe (5)
10) Entfemen des flüssigen [nicht] eingedickten Schlamms (10) aus dem Behälter (1) über eine Vorrichtung (20) zum Gewinnen von nicht eingedicktem Schlamm
11) Öffnen der Entlüftungsvorrichtung (4)
12) Entnehmen des eingedickten Schlamms (11) aus dem Behälter (1) über eine Vorrichtung (9) zum Gewinnen von eingedicktem Schlamm.

## Revendications

1. Installation de filtration et d'épaississement de boues, comprenant une cuve (1) à boues comportant un dispositif d'extraction (9) de boues épaissies, un dispositif d'extraction (20) de boues non-épaissies, des plaques filtrantes (2) disposées dans la cuve (1) à boues, un tuyau de refoulement (3) de filtrat dont une première extrémité est reliée aux plaques filtrantes (2) et l'autre extrémité débouche à l'extérieur de ladite cuve (1) à boues, et comprenant en outre un moyen de déplacement (22, 24, 25) de boues non-épaissies constitué par un corps mobile (22, 24, 25) pouvant, sous l'action d'un dispositif d'entraînement, se rapprocher et s'éloigner de la surface des plaques filtrantes (2), et caractérisée par un moyen d'alimentation (7) en eau servant à alimenter en eau ledit tuyau de refoulement (3) de filtrat, une pompe de refoulement (5) de filtrat fonctionnant sur ledit tuyau de refoulement (3), d'un premier côté de l'endroit où ladite eau est fournie audit tuyau par ledit moyen d'alimentation (7) en eau, et un moyen d'évacuation (4) d'air situé dans ledit tuyau de refoulement (3), de l'autre côté dudit endroit où l'eau est fournie.

2. Installation de filtration et d'épaississement de boues selon la revendication 1, caractérisée en ce que ledit moyen d'alimentation (7) en eau comprend un bac (13) à filtrat et un tuyau d'aspiration (14), une première extrémité dudit tuyau d'aspiration (14) étant immergée dans le bac (13) à filtrat et une autre extrémité étant raccordée au tuyau de refoulement (3) de filtrat en amont de la pompe de refoulement (5) de filtrat par l'intermédiaire d'un robinet-vanne (6).

3. Installation de filtration et d'épaississement de boues selon la revendication 1, caractérisée en ce que ledit moyen d'alimentation (7) en eau comprend un bac (13) à filtrat, un tuyau d'aspiration (14) et une pompe d'alimentation (15) en eau, une première extrémité dudit tuyau d'aspiration (14) étant immergée dans le bac (13) à filtrat et une autre extrémité étant raccordée au tuyau de refoulement (3) de filtrat en amont de la pompe de refoulement (5) de filtrat par l'intermédiaire de la pompe d'alimentation (15) en eau et d'un robinet-vanne (6).

4. Installation de filtration et d'épaississement de boues selon la revendication 1, caractérisée en ce que ledit moyen d'alimentation (7) en eau comprend un bac (13) à filtrat et un tuyau de raccordement (16), une première extrémité dudit tuyau de raccordement (16) étant raccordé à la pompe de refoulement (3) de filtrat en amont de la pompe de refoulement (5) de filtrat par l'intermédiaire du bac (13) à filtrat et d'un robinet-vanne (6), une autre extrémité du tuyau de raccordement (16) étant raccordée au tuyau de refoulement (3) de filtrat en aval de la pompe de refoulement (5) de filtrat par l'intermédiaire d'un deuxième robinet-vanne (17).

5. Procédé de filtration et d'épaississement de boues, caractérisé par les étapes consistant à :
1) délivrer des boues non-épaissies (10) à épaissir dans une cuve (1) à boues contenant un certain nombre de plaques filtrantes (2) ;
2) évacuer de l'air par l'intermédiaire depuis un moyen d'évacuation (4) d'air depuis un tuyau de refoulement (3) de filtrat relié aux faces supérieures des plaques filtrantes (2) ;
3) remplir le tuyau de refoulement (3) de filtrat, par l'intermédiaire d'un robinet-vanne (6), avec de l'eau provenant d'un moyen d'alimentation (7) en eau ;
4) fermer le moyen d'évacuation (4) d'air ;
5) actionner une pompe de refoulement (5) de filtrat et fermer le robinet-vanne (6) pour extraire le filtrat présent dans les plaques filtrantes (2) ;
6) former des boues épaissies (11) sur les plaques filtrantes (2) ;
7) déplacer les boues non-épaissies (10) pour les éloigner des boues épaissies (11) sur les plaques filtrantes (2) à l'aide d'un moyen de déplacement [21, 24, (25, 26, 27), (28, 29)] de boues non-épaissies ;
8) filtrer encore les boues épaissies (11) sur les plaques filtrantes (2) en continuant à actionner la pompe de refoulement (5) de filtrat pour appliquer une pression d'aspiration à la pompe de refoulement (3) de filtrat ;
9) arrêter la pompe de refoulement (5) de filtrat ;
10) retirer les boues fluides épaissies (10) de la cuve (1) à l'aide d'un dispositif d'extraction (20) de boues non-épaissies ;
11) ouvrir le moyen d'évacuation (4) d'air ;
12) retirer les boues épaissies (11) de la cuve (1) à l'aide d'un dispositif d'extraction (9) de boues épaissies.
